# EUROPÄISCHE PATENTSCHRIFT

(11) **EP 0 783 699 B1**
(45) Veröffentlichungstag und Bekanntmachung des Hinweises auf die Patenterteilung: **16.04.2003**
(21) Anmeldenummer: 95934073.8
(22) Anmeldetag: 19.09.1995
(51) Int. Cl.: G01P 21/02, G01P 3/487

(54) **AKTIVER BEWEGUNGSSENSOR**
ACTIVE MOTION SENSOR
CAPTEUR ACTIF DE MOUVEMENTS

(30) Priorität: 30.09.1994 DE 4434977
(43) Veröffentlichungstag der Anmeldung: 16.07.1997
(73) Patentinhaber: Continental Teves AG & Co. oHG, 60488 Frankfurt (DE)
(72) Erfinder: BLECKMANN, Hans-Wilhelm, D-61231 Bad Nauheim (DE); LORECK, Heinz, D-65510 Idstein (DE); LOHBERG, Peter, D-61381 Friedrichsdorf (DE)
(74) Vertreter: Portwich, Peter
(86) Internationale Anmeldenummer: EP9503679
(87) Internationale Veröffentlichungsnummer: WO96010751

(56) Entgegenhaltungen:
- EP-A- 0 569 924
- PATENT ABSTRACTS OF JAPAN vol. 012 no. 341 (P-758) ,13.September 1988 & JP,A,63 100323 (HITACHI LTD) 2.Mai 1988,
- PATENT ABSTRACTS OF JAPAN vol. 016 no. 483 (P-1432) ,7.Oktober 1992 & JP,A,04 172255 (KANSEI CORP) 19.Juni 1992,

## Beschreibung

Die vorliegende Erfindung betrifft sensorische Elemente zur Erfassung von Ortsverschiebungen, Bewegungsgeschwindigkeiten und Drehzahlen im Bereich des Maschinenbaus, insbesondere in der Kraftfahrzeugindustrie, hierbei vorwiegend im Anwendungsbereich geregelter Bremsen, zur Erfassung von Raddrehzahlen.

Sensorische Vorrichtungen zur Erfassung von Raddrehzahlen sind bekannt. Sie bestehen in der Regel aus einem inkrementalen Encoder, der mechanisch mit dem sich drehenden Teil verbunden ist, und einem Sensor, der diesen Encoder berührungslos
abtastet. Als Encoder werden ferromagnetische Zahnräder oder ferromagnetische Scheiben verwendet. Bei Anwendungen in Radlagern ist es auch bekannt, magentisierte Strukturen zu verwenden, z.B. eine ring- oder kreisförmige Anordnung aufeinander folgender Nord- und Südpole, eingebettet in einen mechanischen Träger.

Die gegenwärtig größte Verbreitung haben sogenannte "passive" Sensoren nach dem Reluktanzprinzip. Sie bestehen aus der Kombination einer Kupferspule mit einem Permanentmagneten, der magnetisch an den Encoder gekoppelt ist. Der Encoder moduliert bewegungssynchron die magnetische Koppelreluktanz, wobei in die Kupferspule nach Art eines Dynamos eine bewegungssynchrone Wechselspannung induziert wird, deren Frequenz als Meßgröße ausgewertet wird. Die induzierte Signalspannung verschwindet bei Stillstand und nimmt bei großen Geschwindigkeiten unter Umständen gefährlich hohe Werte an.

Um solch hohe Spannungen zu vermeiden, wurden Sensoren gemäß dem Oberbergiff des Anspruchs 1 entwickelt, sogenannte "aktive" Sensoren. Derartige Sensoren sind bespielsweise in der DE 41 35 789 A1 beschrieben. Sie bestehen aus der Kombination einer magnetostatisch empfindlichen Elementes mit einem Permanentmagneten, der magnetisch an den Encoder gekoppelt ist. Der Encorder moduliert auch hierbei bewegungssynchron die magnetische Koppelreluktanz oder im Fall des magnetisierten Encoders die Feldrichtung, wobei das Sensorelement jeweils auf die Änderungen der Flußdichte bzw. auf die Bewegung eines Feldvektors anspricht. Bekannte Beispiele solcher Grundelemente sind Hall-Sonden oder magnetoresistive Permalloy-Strukturen. Die Signalamplitude solcher aktiver Sensoren ist unabhängig von der Geschwindigkeit des Encoders. Aktive Sensoren setzen zu ihrem Betrieb eine elektrische Energie voraus, welche von einem elektronischen Regler her erfolgt. Hierbei sind Techniken mit 3-Leiter-Zuführung und solche mit 2-Leiter-Zuführungen bekannt. Die 3-Leiter-Version liefert eine Signalspannung an den Eingang des elektronischen Reglers, während die 2-Leiter-Version einen Signalstrom liefert.

Gegenwärtig ausgeführte aktive Sensoren beschränken die von ihnen verfügbare sensorische Information auf einen einzigen Parameter, die Signalfrequenz. Durch eine interne Verstärker- Triggerschaltung wird im Bereich eines definierten zulässigen Luftspaltes zwischen Sensor und Encoder - unabhängig von der Größe dieses Luftspaltes - ein binäres Ausgangsignal mit zwei konstanten Amplitudenwerten generiert, deren Flankenwechsel ausgewertet werden. Das Signal läßt keinen Rückschluß auf den eingestellten Wert zu, setzt aber mit Überschreiten der zulässigen Luftspaltdicke schlagartig aus, da dann eine sensorinterne Hystereseschwelle vom induzierten sinusförmigen Eingangssigang unterschritten wird und der Sensor nicht mehr anspricht.

Zur Gewährleistung einer ordnungsgemäßen Einbaulage des Sensors unter Einhaltung der zulässigen Luftspaltdicke wurde daher in der DE 40 33 064 A1 eine Vorrichtung zur Einstellung der Luftspaltdicke vorgeschlagen. Der Sensor befindet sich in einer hülsenartigen Halterung und wird von einer Druckfeder mit einem Flansch gegen einen entsprechenden Flansch der Halterung in Richtung auf den Encoder gedrückt. Der Flansch des Sensors ist mit einer Mehrzahl gleichartiger axialer Zähne versehen, während der Flansch der Halterung zwei Gruppen von axialen Vertiefungen aufweist, die jeweils in ihrer Anzahl der Zähnezahl entsprechen. Bei der Montage des Sensors befinden sich seine Zähne in der Gruppe der tieferen Vertiefungen und der Einbau der Halterung erfolgt so, daß der Sensor zunächst mit dem Encorder in Berührung steht. Danach werden die Zähne in die Gruppe der flacheren Vertiefungen eingerastet, so daß eine definierte Luftspaltdicke zwischen Sensor und Encoder eingestellt ist. Nach Abschluß der Montage läßt sich die korrekte Einbaulage nicht verifizieren.

Wird eine aktiver Sensor durch Einbaufehler ungewollt an der Grenze seines maximal zulässigen Luftspaltes betrieben, kann eine ausreichend große dynamische Verformung der Kinematik zwischen Sensor und Encoder den Luftspalt unter Umständen derart vergrößern, daß die zulässige Luftspaltdicke überschritten wird und das Ausgangssignal aussetzt.

Aus dem Abstract zu JP4172255 ist es bekannt, thermische Änderungen des Luftspaltes bei einem passiven Rotationssensor mit Hilfe eines eines Stellelementes auszugleichen, welches sich bei Wärme ausdehnt. In Verbindung mit der Beschreibung sind mehrere Ausgangssignale des Sensor bei unterschiedlicher Spaltbreite des Luftspaltes und gleichbleibender Frequenz dargestellt.
Aus der EP-OS ist ein passiver Rotationssensor bekannt, dessen Ausgangssignale mit einer gleichbleibenden Gleichspannung verglichen werden, wobei die Abstände der Flankenschnittpunkte der Ausgangssignale mit der Gleichspannung ein Maß für die Spaltbreite sind. Die vorliegende Erfindung geht daher aus von einem Sensor der sich aus dem Oberbegriff der des Anspruchs 1 ergebenden Gattung.

Der vorliegenden Erfindung liegt die Aufgabe zugrunde, eine Möglichkeit zu schaffen, die Luftspaltdicke auch noch nach Montage des Sensors überprüfbar zu machen.

Diese Aufgabe findet daher eine erste Lösung durch die kennzeichnenden Merkmale des Anspruchs 1. Wenn ein integrierter elektronischer Schaltkreis die vom Sensor an den elektronischen Regler weitergegebenen Ausgangssignale in Abhängigkeit der bestehenden Luftspaltdicke verändert, dann läßt sich durch Auswertung dieser Ausgangssignale durch den elektronischen Regler auch noch nach der Montage des Sensors ohne mechanische Hilfsmittel die Luftspaltdicke während der gesamten Betriebszeit des Sensors überprüfen.

Wird erfindungsgemäß das magnetfeldabhängige Eingangssignal durch den integrierten Schaltkreis derart verstärkt, daß bei einer gewissen Unterschreitung der zulässigen Luftspaltdicke die Spitzen des Signals abgeschnitten werden, dann läßt sich anhand der Breite der entstehenden Plateaus - bei sinusförmigen Ausgangssignalen - bzw. bei Erreichen einer konstanten Amplitude - bei rechteckförmigen oder anderen eckigen Ausgangssignalen - ein Rückschluß auf die Luftspaltdicke ziehen.

Ein weitere Lösung der Aufgabe ergibt sich gemäß den Merkmalen des kennzeichnenden Teils von Anspruch 4, wobei das zweite, weitere Ausgangssignal zur Einsparung von elektrischen Leitungen dem geschwindigkeitsabhängigen Ausgangssignal überlagert sein kann. Dieses zweite, von der Luftspaltdicke abhängige Ausgangssignal kann entweder in seiner Amplitude, seiner Frequenz oder seiner Kurvenform von der Luftspaltdicke beeinflußt sein. Im elektronischen Regler läßt sich dann dieses zweite Ausgangssignal bei Überlagerung mit dem geschwindigkeitsabhängigen Ausgangssignal auf bekannte Weise herausfiltern.

Eine näher Erläuterung des Erfindungsgedankens erfolgt nun durch die Beschreibung von drei Ausführungsbeispielen anhand einer Zeichnung in vier Figuren.
- Fig. 1: zeigt schematisch eine Sensoranordnung mit Encoder, Sensor und elektronischem Regler.
- Fig. 2: stellt den Kurvenverlauf eines sinusförmigen Ausgangssignals mit Amplitudenbegrenzung dar.
- Fig. 3: zeigt einen entsprechenden Kuvenverlauf für rechteckförmige Ausgangssignale.
- Fig. 4: stellt schematisch eine Anordnung dar, bei welcher ein zusätzliches luftspaltabhängiges Ausgangssignal vom Sensor an den Regler abgegeben wird.

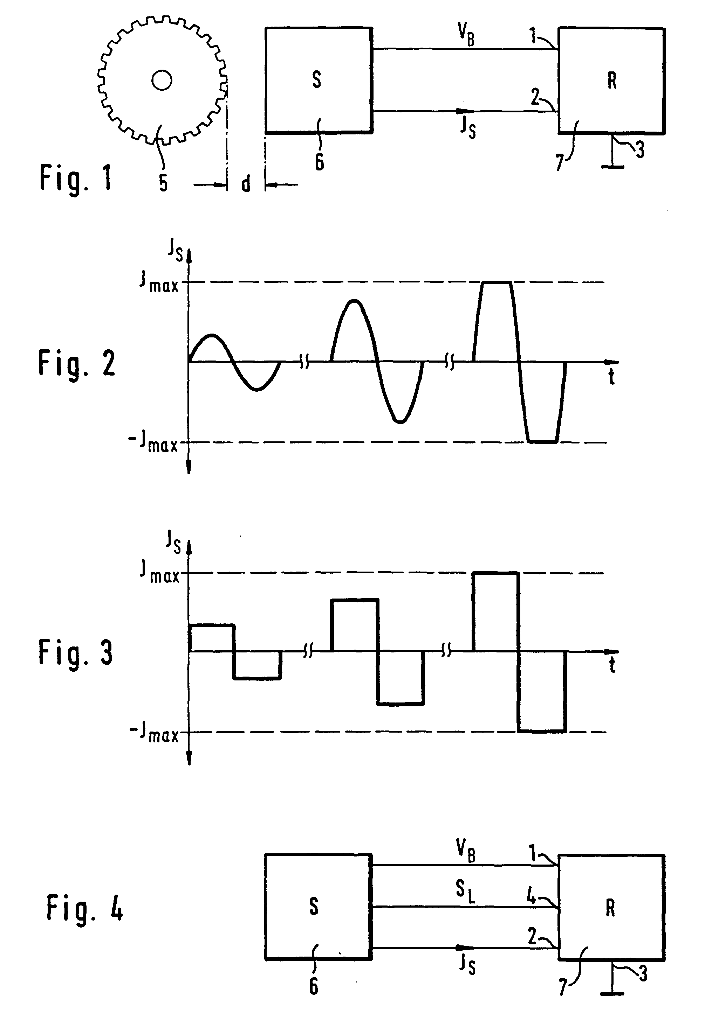

In der Anordnung nach Fig. 1 ist der Encoder 5 symbolhaft als Zahnrad dargestellt. Dies schließt aber Anwendungen auf Encoder mit benachbarten magnetischen Nord- und Südpolen nicht aus. Auch wird die Erfindung am Beispiel eines Sensors mit
2-Leiter-Zuführung erklärt, ist aber ohne weiteres auf Sensoren mit 3-Leiter-Zuführung übertragbar.

Wie aus Fig. 1 deutlich wird, ist der aktive Sensor 6 an einen elektronischen Regler 7 über eine 2-Drahtverbindung angeschlossen. An Pin 1 gegen Pin 3 wird der Sensor 6 vom Regler 7 mit einer Betriebsspannung V_{B} versorgt und liefert über Pin 2 einen Signalstrom I_{S} an den Regler zurück. Ob der Sensor 6 ordnungsgemäß funktioniert, hängt davon ab, ob die Luftspaltdicke d zwischen dem Sensor 6 und dem Encoder 5 im zulässigen Rahmen liegt.

In einer ersten Ausführungsform der Erfindung gemäß Fig. 2 wird ein sinusähnliches Eingangssignal, das durch die Wirkung des Encoders 5 am magnetfeldempfindlichen Sensor 6 entsteht und dessen Spitzwert mit der Luftspaltdicke d variiert, durch einen sensorintgerierten elektronischen Schaltkreis (nicht dargestellt) verstärkt und in den Signalstrom I_{S} umgewandelt. Der Amplitudenbereich des Signalstromes I_{S} ist begrenzt auf den Wert Iₘₐₓ, so daß bei ausreichender Annäherung zwischen Sensor 6 und Encoder 5 die sinusähnliche Kurvenform einen rechteckähnlichen Verlauf annimmt. Die Darstellung zeigt von links nach rechts eine schrittweise Verminderung der Luftspaltdicke d. Nach der Montage des Sensors 6 kann an der Amplitudenhöhe bzw. der Stärke der Amplitudenbegrenzung des Signalstromes I_{S} kontrolliert werden, ob eine ausreichende Luftspaltreserve besteht, d.h., ob auch bei dynamischer Verformung der Kinematik zwischen Sensor 6 und Encoder 5 ein ausreichendes Eingangssignal gewährleistet bleibt.

Eine zweite Ausführungsform der Erfindung zeigt Fig. 3. Der sensorintegrierte elektronische Schaltkreis ist hier so ausgebildet, daß die Kurvenform des Signalstromes IS stets eine rechteckförmige ist, jedoch die Amplitude des Rechteckes in Abhängigkeit von der Amplitude des sinusähnlichen Eingangssignales, das durch die Wirkung des Encoders 5 am magnetfeldempfindlichen Sensor 6 entsteht, und dessen Spitzenwert mit der Luftspaltdicke d variiert, veränderlich ist. Die Darstellung zeigt wiederum von links nach rechts eine schrittweise Verminderung der Luftspaltdicke d. Nach der Montage des Sensors 6 kann an der Amplitudenhöhe kontrolliert werden, ob eine ausreichende Luftspaltreserve besteht. Dabei können die Verstärkung des Eingangssignales und die Amplitudenbegrenzung des Signalstromes I_{S} so aufeinander abgestimmt sein, daß die Luftspaltdicke d dann optimal ist, wenn die Amplitude der rechteckförmigen Kurve des Signalstromes I_{S} ihren Maximalwert Iₘₐₓ erreicht und sich in Folge bei weiterer Annäherung des Sensors 6 an den Encoder 5 nicht mehr ändert.

Im Beispiel nach Fig. 4 schließlich ist der sensorintegrierte elektronische Schaltkreis so ausgebildet, daß der Signalstrom IS stets eine rechteckige Kurvenform mit konstanter Amplitude aufweist, wie es aus dem Stand der Technik an sich bekannt ist, daß jedoch zusätzlich ein Signal S_{L} an den Regler 7 gesendet wird, das eine Information über die Intensität des sinusähnlichen Eingangssignales enthält, welches durch das Zusammenwirken des Encoders 5 mit dem magnetfeldabhängigen Sensor 6 entsteht und dessen Spitzenwert mit der Luftspaltdicke d veränderlich ist. In der Abbildung wird das Ausgangssignal S_{L} über eine Leitung an Pin 4 des Reglers zugeführt. Es ist jedoch ebenso im Sinne der Erfindung, das Ausgangssignal S_{L} dem Signalstrom I_{S} zu überlagern. Bei einer hier nicht gezeigten 3-Leiter-Version des Sensors 6 würde das Signal S_{L} der Signalspannung überlagert, welche die Informationen über die Geschwindigkeit des Encoders an den Regler 7 übermittelt.

Je nach gewählter Ausführungsform der Erfindung kann das Ausgangssignal S_{L} eine konstante Amplitude haben, deren Wert mit konstanter Amplitude auftritt, wenn eine bestimmte Intensitätsschwelle des magnetfeldabhängigen Eingangssignales unterschritten wird.

## Patentansprüche

1. Aktiver Sensor zur Erfassung von Ortsverschiebungen, Bewegungsgeschwindigkeiten oder Drehzahlen eines Encoders (5), wobei zur Entstehung eines ausreichenden vom Encoder (5) im Sensor (6) induzierten Eingangssignals eine definierte zulässige Luftspaltdicke (d) zwischen Sensor (6) und Encoder (5) nicht überschritten werden darf und wobei der Sensor (6) an einen elektronischen Regler (7) Ausgangssignale (IS) weitergibt, deren Amplitude geschwindigkeitsunabhängig ist, mit einem integrierten elektronischen Schaltkreis, durch welchen die Stärke und/oder die Form eines an den elektronischen Regler (7) abgegebenen Ausgangssignals (I_{S'}S_{L}) signifikant mit der Luftspaltdicke (d) veränderlich ist, **dadurch gekennzeichnet, daß** der integrierte Schaltkreis die mit sinkender Luftspaltdicke (d) wachsenden Eingangssignale um einen so großen Faktor verstärkt, daß eine sensorinterne Amplitudenbegrenzung (Iₘₐₓ) die Extrema des Ausgangssignales (I_{S}) abschneidet, wenn die zulässige Luftspaltdicke (d) um ein bestimmtes Maß unterschritten wird.

2. Sensor nach Anspruch 1, **dadurch gekennzeichnet, daß** annähernd sinusförmige Ausgangssignale erzeugt werden, die bei Amplitudenbegrenzung plateauförmige Extrema erhalten

3. Sensor nach Anspruch 1, **dadurch gekennzeichnet, daß** annähernd rechteckförmige Ausgangssignale (I_{S}) erzeugt werden, deren Amplitude bei Amplitudenbegrenzung konstant bleibt.

4. Aktiver Sensor zur Erfassung von Ortsverschiebungen, Bewegungsgeschwindigkeiten oder Drehzahlen eines Encoders (5), wobei zu Entstehung eines ausreichenden vom Encoder (5) im Sensor (6) induzierten Eingangssignals eine definierte zulässige Luftspaltdicke (d) zwischen Sensor (6) und Encoder (5) nicht überschritten werden darf und wobei der Sensor (6) an einen elektronischen Regler (7) Ausgangssignale (IS) weitergibt, deren Amplitude geschwindigkeitsunabhängig ist, mit einem integrierten elektronischen Schaltkreis, durch welchen die Stärke und/oder die Form eines and den elektronischen Regler (7) abgegebenen Ausgangssignals (I_{S}, S_{L}) signifikant mit der Luftspaltdicke (d) veränderlich ist, **dadurch gekennzeichnet, daß** dem elektronischen Regler (7) außer dem Ausgangssignal (I_{S}), welches die Information über die Bewegung des Encoders (5) gibt, ein weiteres Ausgangssignal (S_{L}) zugeführt wird, das abhängig von Luftspaltdicke (d) veränderlich ist und daß die Amplitude des weiteren Ausgangssignals (S_{L}) immer dann mit konstantem Wert auftritt, wenn die Amplitude des Eingangssignals einen bestimmten Wert unterschreitet.

5. Sensor nach Anspruch 4, **dadurch gekennzeichnet, daß** die beiden Ausgangssignale (I_{S},S_{L}) überlagert sind.

6. Sensor nach Anspruch 4 oder 5, **dadurch gekennzeichnet, daß** die Amplitude des weiteren Ausgangssignals (S_{L}) luftspaltabhängig ist.

7. Sensor nach Anspruch 4 oder 5, **dadurch gekennzeichnet, daß** die Luftspaltdicke (d) die Frequenz des weiteren Ausgangssignals (S_{L}) beeinflußt.

8. Sensor nach Anspruch 4 oder 5, **dadurch gekennzeichnet, daß** die Luftspaltdicke (d) die Kurvenform des weiteren Ausgangssignals (S_{L}) beeinflußt.

## Claims

1. Active sensor for determining displacements, motional speeds, or rotational speeds of an encoder (5), wherein for generating an appropriate input signal in the sensor (6) induced by the encoder (5) a defined, permissible air slot size (d) between the sensor (6) and the encoder (5) must not be exceeded, and wherein the sensor (6) transmits output signals (I_{S}), having an amplitude irrespective of speed, to an electronic controller (7), with an integrated electronic circuit by which the strength and/or the shape of an output signal (I_{S}, S_{L}) sent to the electronic controller (7) is significantly variable as a function of the air slot size (d),
**characterized in that** the integrated circuit amplifies the input signals, which rise as the air slot size (d) decreases, by a factor so great that a sensor-internal limitation of amplitude (Iₘₐₓ) clips the extreme values of the output signal (I_{S}) when the air slot size (d) falls short of the permissible slot size by a defined amount.

2. Sensor as claimed in claim 1,
**characterized in that** roughly sinusoidal output signals are generated which are given plateau-shaped extreme-values in the event of a limitation of amplitude.

3. Sensor as claimed in claim 1,
**characterized in that** output signals (I_{S}) of a roughly square-wave shape are generated which have an amplitude that remains constant in the event of a limitation of amplitude.

4. Active sensor for determining displacements, motional speeds, or rotational speeds of an encoder (5), wherein for generating an appropriate input signal in the sensor (6) induced by the encoder (5) a defined, permissible air slot size (d) between the sensor (6) and the encoder (5) must not be exceeded, and wherein the sensor (6) transmits output signals (I_{S}), having an amplitude irrespective of speed, to an electronic controller (7), with an integrated electronic circuit by which the strength and/or the shape of an output signal (I_{S}, S_{L}) sent to the electronic controller (7) is significantly variable as a function of the air slot size (d),
**characterized in that**, in addition to the output signal (I_{S}) which provides the information about the motion of the encoder (5), the electronic controller (7) is furnished with another output signal (S_{L}) which is variable as a function of the air slot size (d), and **in that** the amplitude of the further output signal (S_{L}) adopts a constant value whenever the amplitude of the input signals falls short of a defined value.

5. Sensor as claimed in claim 4,
**characterized in that** the two output signals (I_{S}, S_{L}) are superimposed on one another.

6. Sensor as claimed in claim 4 or 5,
**characterized in that** the amplitude of the further output signal (S_{L}) is responsive to the air slot.

7. Sensor as claimed in claim 4 or 5,
**characterized in that** the air slot size (d) influences the frequency of the further output signal (S_{L}).

8. Sensor as claimed in claim 4 or 5,
**characterized in that** the air slot size (d) influences the shape of the curve of the further output signal (S_{L}).

## Revendications

1. Capteur actif permettant de détecter des décalages de position, vitesses de mouvement ou vitesses de rotation d'un codeur (5), dans lequel, pour la formation d'un signal d'entrée, induit par le codeur (5) dans le capteur (6), qui soit suffisant, une largeur d'entrefer (d) admissible définie entre le capteur (6) et le codeur (5) ne doit pas être dépassée vers le haut, le capteur (6) transmettant à un régulateur électronique (7) des signaux de sortie (I_{S}) dont l'amplitude est indépendante de la vitesse, le capteur comprenant un circuit électronique intégré au moyen duquel l'amplitude et/ou la forme d'un signal de sortie (I_{S}, S_{L}) délivré au régulateur électronique (7) est variable d'une manière significative avec la largeur d'entrefer (d), **caractérisé en ce que** le circuit intégré amplifie les signaux d'entrée, qui croissent lorsque la largeur d'entrefer (d) diminue, d'un facteur dont la grandeur est telle qu'une limitation de amplitude (Iₘₐₓ) interne au capteur écrête les extremum du signal de sortie (I_{S}) lorsque la largeur d'entrefer (d) admissible est dépassée vers le bas d'une valeur déterminée.

2. Capteur suivant la revendication 1, **caractérisé en ce que** sont produits des signaux de sortie approximativement sinusoïdaux qui, lors d'une limitation d'amplitude, ont des extremums en forme de plateau.

3. Capteur suivant la revendication 1, **caractérisé en ce que** sont produits des signaux de sortie approximativement rectangulaires (I_{S}) dont l'amplitude reste constante lors d'une limitation d'amplitude.

4. Capteur actif permettant de détecter des décalages de position, vitesses de mouvement ou vitesses de rotation d'un codeur (5), dans lequel, pour la formation d'un signal d'entrée, induit par le codeur (5) dans le capteur (6), qui soit suffisant, une largeur d'entrefer (d) admissible définie entre le capteur (6) et le codeur (5) ne doit pas être dépassée vers le haut, le capteur (6) transmettant à un régulateur électronique (7) des signaux de sortie (I_{S}) dont l'amplitude est indépendante de la vitesse, le capteur comprenant un circuit électronique intégré au moyen duquel l'amplitude et/ou la forme d'un signal de sortie (I_{S}, S_{L}) délivré au régulateur électronique (7) est variable d'une manière significative avec la largeur d'entrefer (d), **caractérisé en ce que**, outre le signal de sortie (I_{S}) qui fournit l'information concernant le mouvement du codeur (5), il est envoyé au régulateur électronique (7) un second signal de sortie (S_{L}) qui est variable en fonction de la largeur d'entrefer (d) et **en ce que** l'amplitude du second signal de sortie (S_{L}) se présente toujours avec une valeur constante lorsque l'amplitude du signal d'entrée dépasse vers le bas une valeur déterminée.

5. Capteur suivant la revendication 4, **caractérisé en ce que** les deux signaux de sortie (I_{S}, S_{L}) sont superposés.

6. Capteur suivant la revendication 4 ou 5, **caractérisé en ce que** l'amplitude du second signal de sortie (S_{L}) est dépendante de l'entrefer.

7. Capteur suivant la revendication 4 ou 5, **caractérisé en ce que** la largeur d'entrefer (d) influe sur la fréquence du second signal de sortie (S_{L}).

8. Capteur suivant la revendication 4 ou 5, **caractérisé en ce que** l'épaisseur d'entrefer (d) influe sur la forme de courbe du second signal de sortie (S_{L}).
